# EUROPÄISCHE PATENTANMELDUNG

(11) **EP 2 787 048 A1**
(43) Veröffentlichungstag der Anmeldung: **08.10.2014**
(21) Anmeldenummer: 13001735.3
(22) Anmeldetag: 04.04.2013
(51) Int. Cl.: C09J 7/02

(54) **Laminierfolie**

(71) Anmelder: Swedex GmbH & Co. KG, 45127 Essen (DE)
(72) Erfinder: Loibl, Bernd, D-79771 Klettgau (DE)
(74) Vertreter: Albrecht, Dirk

(57) **Zusammenfassung**

Die Erfindung betrifft eine Laminierfolie zum Einschweißen von Blattgut unter Verwendung von zwei übereinander liegenden Laminierfolienblättern aus der Laminierfolie, wobei die Laminierfolie als Verbundfolie mit einer Folienschicht aus einem transparenten, insbesondere glasklaren Kunststoff und mit einer darauf aufgebrachten Klebeschicht aus einem Schmelzklebstoff ausgebildet ist, der nach dem Laminieren des Blattgutes transparent, insbesondere glasklar ist, wobei die Folienschicht aus einem biologisch abbaubaren Kunststoff, insbesondere einem Biokunststoff, besteht. Des Weiteren betrifft die Erfindung die Verwendung einer solchen Laminierfolie.

## Beschreibung

Die Erfindung betrifft eine Laminierfolie zum Einschweißen von Blattgut unter Verwendung von zwei übereinanderliegenden Laminierfolienblättern aus der Laminierfolie, wobei die Laminierfolie als Verbundfolie mit einer Folienschicht auf einem transparenten, insbesondere glasklaren Kunststoff und mit einer darauf aufgebrachten Klebstoffschicht aus einem Schmelzklebstoff ausgebildet ist, der nach dem Laminieren des Blattgutes transparent, insbesondere glasklar ist.

Zum Schutz von Blattgut, insbesondere von wertvollen Dokumenten, ist es bekannt, das Blattgut mit einer Laminierfolie beidseitig einzuschweißen. Dies geschieht im nicht industriellen Bereich, d.h. im Büro- und Privatbereich, mit Hilfe von in der Regel als Tischgeräte ausgebildeten Laminiergeräten. Sie haben ein Gehäuse, in dem eine Laminiereinrichtung angeordnet ist. Zwischen einer Zuführöffnung auf einer Seite und einer Austrittöffnung auf der anderen Seite des Gehäuses erstreckt sich durch das Gehäuse ein Durchlaufkanal, dem die Laminiereinrichtung zugeordnet ist. Letztere weist in der Regel mindestens ein Walzenpaar, teilweise auch mehrere Walzenpaare, aus jeweils zwei übereinander angeordneten, zwischen sich einen Laminierspalt ausbildenden Laminierwalzen auf, wobei der Laminierspalt so eingestellt ist, dass die Kombination aus Blattgut und Laminierfolie in dem Laminierspalt einem erheblichen Druck ausgesetzt wird. Bei Heißlaminiergeräten ist zumindest eine der Laminierwalzen, in der Regel beide, beheizt, oder es sind zusätzliche Heizeinrichtungen vorgesehen. Hierdurch wird die Kombination aus Blattgut und Laminierfolie beim Durchlauf erhitzt, so dass die Laminierfolie aufgrund der Aktivierung der Klebeschicht mit dem einzuschweißenden Blattgut verklebt. Ein Beispiel für ein Laminiergerät der vorbeschriebenen Art ist der EP 2 329 950 B1 zu entnehmen.

Laminierfolien für den vorbeschriebenen Zweck sind als Verbundfolien ausgebildet, bei denen jeweils eine Folienschicht aus zum Beispiel Polyethylen oder Polypropylen innenseitig mit einer Klebeschicht vollflächig kaschiert ist, die bei Umgebungstemperatur nicht oder kaum klebfähig ist. In der Regel wird für die Klebeschicht ein Schmelzklebstoff verwendet, der durch Einwirkung von Hitze im Temperaturbereich zwischen 100 und 200°C aktivierbar ist. Als Schmelzklebstoff wird gewöhnlich ein Ethylen-Vinylacetat-Copolymer (EVA) verwendet. Beim Durchlauf durch das Laminiergerät wird der Schmelzklebstoff so erhitzt, dass der plastifiziert und seine Klebfähigkeit entwickelt. Die hierfür notwendige Temperatur liegt unterhalb derjenigen Temperatur, die insbesondere die Transparenz der Folienschicht beeinträchtigen könnte. Beim Durchlauf durch das Laminiergerät wird die in der Regel zunächst opake Klebeschicht unter der Einwirkung von Hitze und Druck transparent, so dass das eingeschweißte Blattgut sichtbar ist.

In der Regel wird zum Einschweißen des Blattguts eine taschenförmig ausgebildete Laminierfolie verwendet, bei der zwei gleichgroße rechteckige Laminierfolienblätter deckungsgleich übereinander gelegt sind und an zumindest einer, in der Regel an zwei aneinander stoßenden Kanten unter Bildung einer Laminierfolientasche miteinander verbunden, insbesondere verschweißt sind. Solche Laminierfolientaschen sind im Privat- und Bürobereich in allgemeinem Gebrauch und z.B. der DE 201 00 328 U1, der EP 2 329 950 B1 und der DE 197 44 595 A1 zu entnehmen. Dabei sind die Laminierfolienblätter derart übereinandergelegt, dass sie mit ihren Klebeschichten aneinander liegen, die Klebeschichten also die Innenseiten der Laminierfolienblätter bedecken.

Anstatt der Verwendung von Laminierfolientaschen ist es bekannt, Laminierfolienkartuschen in einem dafür ausgebildeten Bindegerät zu verwenden. Bei diesen Laminierfolienkartuschen ist eine Laminierfolie großer Länge jeweils auf eine Walze aufgewickelt. Für den Einschweißvorgang wird das Blattgut in das Bindegerät eingeführt. Im Bindegerät wird es dann durch Abziehen der Laminierfolie von den Kartuschen beidseitig eingehüllt, d.h. kaschiert und nach Aufheizen und Verpressen beschnitten. Ein entsprechendes Bindegerät ist der DE 100 04 486 A1 zu entnehmen.

Der Erfindung liegt die Aufgabe zugrunde, eine Laminierfolie derart auszubilden, dass sie verbesserte Eigenschaften aufweist.

Diese Aufgabe wird erfindungsgemäß dadurch gelöst, dass die Folienschicht aus einem biologisch abbaubaren Kunststoff, insbesondere einem Biokunststoff bzw. Biopolymer besteht. Grundgedanke der Erfindung ist es also, eine Laminierfolie zu Verfügung zu stellen, die aufgrund ihrer biologischen Abbaubarkeit ökologisch besonders wertvoll ist. Überraschenderweise hat sich gezeigt, dass auch Biopolymere in der Lage sind, die hohen Beanspruchungen in einem Laminiergerät unbeschadet zu überstehen und gleichwohl eine feste, und schützende Verbindung mit dem Blattgut einzugehen.

Die biologische Abbaubarkeit des für die Folienschichten verwendeten Kunststoff ist nach DIN EN 13432 gegeben, wenn der Kunststoff nach einer festgeschriebenen Zeit unter definierten Temperatur-, Sauerstoff- und Feuchtebedingungen in der Anwesenheit von Mikroorganismen oder Pilzen zu mehr als 90% zu Wasser, Kohlendioxid (CO₂) und Biomasse abgebaut wird.

Erfindungsgemäß kommt vorzugsweise ein Biokunststoff zur Anwendung, also ein Kunststoff auf der Basis nachwachsender Rohstoffe. Der Rohstoff kann Zucker, Zuckerderivate, Stärke, Stärkederivate, Zellulose, Zellulosederivate und/oder Lingnin sein. Stattdessen oder in Kombination damit kann der Rohstoff aber auch ein Polylactidacid (PLA) und/oder eine Polyhydroxyfettsäure (PHF), insbesondere Polyhydroxybutyrat (PHB) und/oder Polyhydroxyvalerat (PAV) sein. Polylactide sind biologisch abbaubare Polyester und werden aus dem Monomer Milchsäure polymerisiert, wobei die Milchsäureproduktion vorrangig unter Nutzung von Maisstärke erfolgt. Polyhydroxyfettsäuren sind durch die Einwirkung von Bakterien oder Pilzen aus Zucker oder Stärke gewonnene thermoplastische Polyester. Alternativ dazu kann der Biokunststoff auch ein fossiler Rohstoff sein, beispielsweise Polyester.

Der biologisch abbaubare Rohstoff sollte zumindest zu 50%, vorzugsweise mindestens 80%, besser noch mindestens zu 85%, 90% oder zu 95% in der Folienschicht vorhanden sein. Der Rest kann dann aus geeigneten Hilfs- und Zusatzstoffen, wie Stabilisatoren, Antistatika oder dergleichen bestehen.

Die Laminierfolie kann in Rollenform, z. B. als Laminierfolienkartusche vorliegen, wenn sie für den Einsatz in ein entsprechend ausgebildetes Laminiergerät vorgesehen ist (vgl. z.B. DE 100 04 486 A1). Die Laminierfolie hat dann eine große Länge, so dass eine Laminierfolienkartusche für eine Vielzahl von Einschweißvorgängen ausreicht. Stattdessen können aber auch aus der Laminierfolie deckungsgleich zugeschnittene Laminierfolienblätter verwendet werden, zwischen denen dann das Blattgut angeordnet wird, wobei die Klebstoffschichten einander zugewandt sind. Dabei ist es für die Handhabbarkeit zweckmäßig, wenn die Laminierfolienblätter an zumindest einer Kante miteinander verbunden sind, vorzugsweise sogar an zwei aneinander stoßenden Kanten, so dass eine Laminierfolientasche gebildet wird (vgl. z.B. EP 2 329 950 B1, Abschnitte [0015] und [0037], [0038]; DE 197 44 595 A1, Spalte 2, Zeilen 5 bis 56 mit Figuren 1 und 2). Eine solche Laminierfolientasche erleichtert die parallele Ausrichtung der Kanten des Blattgutes und der Laminierfolienblätter beim Einlegen des Blattgutes zwischen die beiden Laminierfolienblätter und vermeidet weitgehend ein Verrutschen des Blattgutes bei der anschließenden Handhabung zum Zwecke des Einführens in das Laminiergerät. Insoweit noch bessere Verhältnisse lassen sich erreichen, wenn die Laminierfolienblätter über drei aneinander stoßende Kanten miteinander verschweißt sind. Es versteht sich, dass die Laminierfolienblätter so aufeinandergelegt sind, dass ihre Klebeschichten aneinander liegen, also einander benachbart sind. Dabei ist es ausreichend, wenn die Laminierfolientaschen für das Einschweißen von Blattgut mit einer Größe von maximal DIN A3, vorzugsweise DIN A4 dimensioniert ist.

In besonders bevorzugter Ausführungsform besteht der Schmelzklebstoff der Klebstoffschicht zumindest teilweise, vorzugsweise ganz aus einem thermoplastischen Biopolymer, beispielsweise einem Bio-Polyethylen und/oder Bio-Polypropylen. Beide Materialien lassen sich aus nachwachsenden Rohstoffen, beispielsweise auf der Basis von Zuckerrohr, herstellen. Dabei kann es von Vorteil sein, wenn der Schmelzklebstoff eine Mischung aus dem Bio-Polymer und Ethylen-Vinlyacetat ist. Der Anteil des Ethylen-Vinylacetats sollte jedoch so gering wie möglich sein, damit die Laminierfolie als Ganzes vornehmlich biologisch abbaubar ist. Insbesondere sollte der Anteil weniger als 50%, besser noch weniger als 30%, insbesondere weniger als 20% betragen. Noch besser ist es, wenn der Anteil des Ethylen-Vinylacetats geringer als 10%, insbesondere geringer als 5%, ist.

Gegenstand der Erfindung ist des Weiteren die Verwendung der vorbeschriebenen Laminierfolie zum Einschweißen von vorzugsweise einzelnem Blattgut, insbesondere von Blattgut in maximal DINA A3-, vorzugsweise DIN A4- oder DIN A5-Format, in dem das Blattgut zwischen zwei Laminierfolieblättern der Laminierfolie gelegt und dann die Laminierfolienblätter flächig durch Aktivierung der Klebeschicht mittels Druck und Hitze verschweißt werden. Dabei sollte insbesondere eine Laminierfolientasche verwendet werden, wie sie vorstehend beschrieben ist.

## Patentansprüche

1. Laminierfolie zum Einschweißen von Blattgut unter Verwendung von zwei übereinander liegenden Laminierfolienblättern aus der Laminierfolie, wobei die Laminierfolie als Verbundfolie mit einer Folienschicht aus einem transparenten, insbesondere glasklaren Kunststoff und mit einer darauf aufgebrachten Klebeschicht aus einem Schmelzklebstoff ausgebildet ist, der nach dem Laminieren des Blattgutes transparent, insbesondere glasklar ist, **dadurch gekennzeichnet, dass** die Folienschicht aus einem biologisch abbaubaren Kunststoff, insbesondere einem Biokunststoff, besteht.

2. Laminierfolie nach Anspruch 1, **dadurch gekennzeichnet, dass** der Biokunststoff unter Verwendung nachwachsender Rohstoffe hergestellt ist.

3. Laminierfolie nach Anspruch 2, **dadurch gekennzeichnet, dass** der Rohstoff Zucker, Stärke, Stärkederivate, Zellulose, Zellulosederivate und/oder Lingnin ist.

4. Laminierfolie nach Anspruch 2 oder 3, **dadurch gekennzeichnet, dass** der Rohstoff ein Polylactidacid (PLA) und/oder eine Polyhydroxyfettsäure (PHF), insbesondere Polyhydroxybutyrat (PHB) und/oder Polyhydroxyvalerat (PAV) ist.

5. Laminierfolie nach Anspruch 1, **dadurch gekennzeichnet, dass** der Biokunststoff ein fossiler Rohstoff, insbesondere Polyester, ist.

6. Laminierfolie nach einem der Ansprüche 1 bis 5, **dadurch gekennzeichnet, dass** der Rohstoff als Grundstoff zumindest 50%, vorzugsweise mindestens 80%, besser noch mindestens 85%, 90% oder 95%, in der Folienschicht vorhanden ist.

7. Laminierfolie nach einem der Ansprüche 1 bis 6, **dadurch gekennzeichnet, dass** zwei deckungsgleiche Laminierfolienblätter aus der Laminierfolie im Bereich zumindest einer, insbesondere zumindest zweier aneinander stoßender Kanten unter Bildung einer Laminierfolientasche miteinander verbunden, insbesondere verschweißt sind, wobei die Klebeschichten einander benachbart sind.

8. Laminierfolie nach Anspruch 7, **dadurch gekennzeichnet, dass** die Laminierfolientasche für das Einschweißen von Blattgut mit einer Größe von maximal DIN A3, insbesondere DIN A4 dimensioniert ist.

9. Laminierfolie nach einem der Ansprüche 1 bis 8, **dadurch gekennzeichnet, dass** der Schmelzklebstoff teilweise oder ganz aus einem thermoplastischen Biopolymer besteht.

10. Laminierfolie nach Anspruch 9, **dadurch gekennzeichnet, dass** das Biopolymer ein Bio-Polyethylen und/oder Bio-Polypropylen ist.

11. Laminierfolie nach Anspruch 9 oder 10, **dadurch gekennzeichnet, dass** der Schmelzklebstoff eine Mischung aus dem Biopolymer und Ethylenvinylacetat ist, insbesondere der Anteil des Ethylenvinylacetat weniger als 50%, weniger als 30%, insbesondere weniger als 20%, vorzugsweise weniger als 10%, insbesondere weniger als 5%, beträgt.

12. Verwendung der Laminierfolie nach einem der Ansprüche 1 bis 11 zum Einschweißen von Blattgut, indem das Blattgut zwischen zwei Laminierfolienblättern der Laminierfolie gelegt und dann die Laminierfolienblätter flächig durch Aktivierung der Klebeschicht mittels Druck und Hitze verschweißt werden.

13. Verwendung nach Anspruch 12, **dadurch gekennzeichnet, dass** eine Laminierfolientasche gemäß Anspruch 8 oder 9 verwendet wird.
